# EUROPEAN PATENT SPECIFICATION

(11) **EP 1 109 009 B1**
(45) Date of publication and mention of the grant of the patent: **11.04.2007**
(21) Application number: 99933175.4
(22) Date of filing: 29.07.1999
(51) Int. Cl.: G01N 21/88, G01N 21/956, G06T 7/00

(54) **WIRING PATTERN INSPECTING APPARATUS**
VORRICHTUNG ZUR BESTIMMUNG DER LEITERBAHNSTRUKTUR
APPAREIL POUR DETERMINATION DES CONFIGURATIONS DES CONDUCTEURS

(30) Priority: 31.07.1998 JP 21677298
(43) Date of publication of application: 20.06.2001
(73) Proprietor: IBIDEN CO., LTD., Ogaki-shi, Gifu-ken 503-0917 (JP)
(72) Inventor: OKADA, Masahiro, Ogaki-shi, Gifu 503-0961 (JP)
(74) Representative: Winter, Brandl, Fürniss, Hübner Röss, Kaiser, Polte Partnerschaft Patent- und Rechtsanwaltskanzlei
(86) International application number: PCT/JP1999/004096
(87) International publication number: WO 2000/006997

(56) References cited:
- EP-A- 0 498 462
- JP-A- 6 294 626
- JP-A- 7 020 062
- JP-A- 7 027 534
- JP-A- 11 166 903
- US-A- 4 797 939
- US-A- 5 608 816

## Description

### BACKGROUND OF THE INVENTION

### FIELD OF THE INVENTION

The present invention relates to an a wiring pattern inspecting apparatus for inspecting a printed wiring board.

### DISCUSSION OF THE BACKGROUND

A printed wiring board often includes an element having a shape that is often misjudged by a wiring pattern inspecting apparatus as a defect. Such an element must not be a target of the inspection. A hole such as a plated through hole and a photo via hole (hereinafter referred to as "a via hole") connecting layers, may have a shape that is misjudged as a defect. For example, Japanese Patent Laid-Open No. 6-294626 bulletin discloses a conventional wiring pattern inspecting apparatus carrying out a quality inspection of a wiring pattern by extracting true defect data based on a pattern image got by capturing an object to be inspected, and a hole mask image made separately. That is, among defect candidate data, i.e. data of a possibly or potentially defect element, in the pattern image, data not corresponding to the hole mask image are true defect data. This hole mask image is made by contrasting a hole measurement signal showing a part comprising a shape considered to be a plated through hole in a pattern image and a hole recognition effective signal provided from specifications of the object to be inspected.

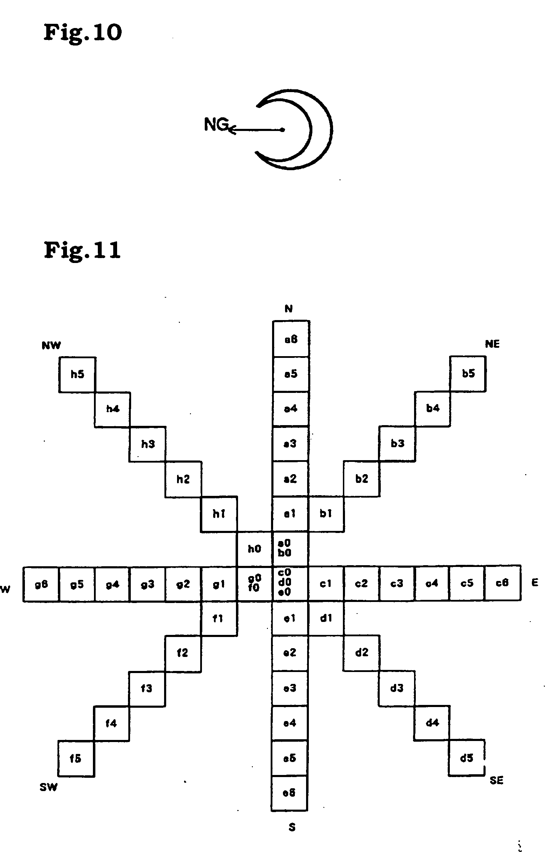

In this conventional technique, the extraction of the hole measurement signal from the pattern image is done as follows. As shown in Figure 11, the number of consecutively arranged black pixels is counted in each of eight directions N, NE, E, SE, S, SW, W, NW from an area where four black pixels are gathered in a binarized pattern image. And the hole measurement signal is on at respective pixels of the area if in each direction the number of consecutive black pixels is within a predetermined range (an upper limit value and a lower limit value of a number of pixels corresponding to a plated through hole radius).

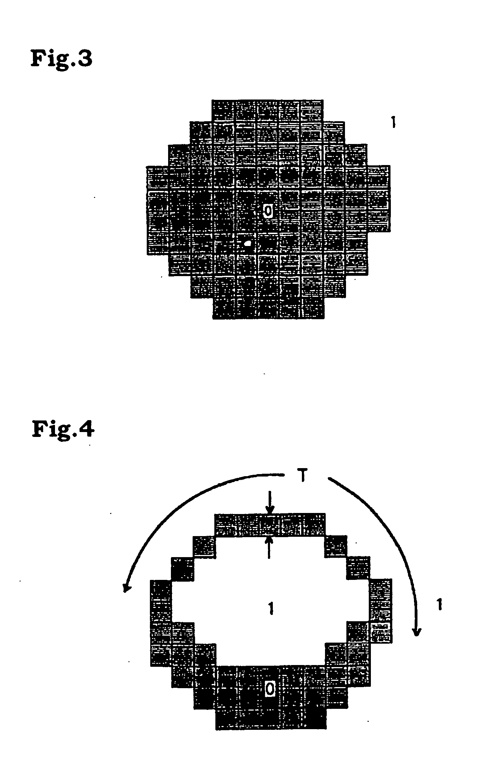

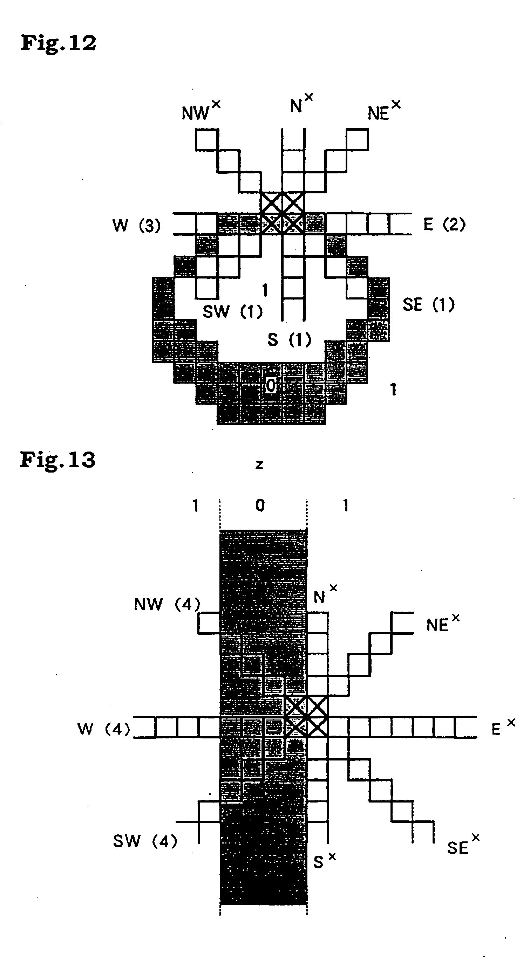

However, the conventional wiring pattern inspecting apparatus has the following problem. Although a penetration hole such as a plated through hole can be coped with, a non-penetration hole such as a blind via hole formed by a laser process or a photo via hole cannot because of a difference between the binarized pattern images of a plated through hole and a photo via hole. If an internal pixel of a plated through hole is binarized, the resulting pixel is always black. Because of this, in a binarized pattern image, the plated through hole appears as an approximately circular mass of black pixels as shown in Figure 3. Therefore the plated through hole can be recognized by a measurement such as Figure 11. In Figure 3, "0" corresponds to a black level whereas "1" corresponds to a white level (the same in Figure 4, Figure 13 and so forth).

In contrast, as for a photo via hole and so on, an internal pixel does not always become black because copper on the base of the hole shines dully. So, as shown in Figure 4, on a binarized pattern image, the photo via hole is recognized as a black pixel area of a distorted shape. There may be a part T that has only one pixel width in the black pixel area. If the measurement such as the one shown in Figure 11 is done centering at the part T, as shown in Figure 12, a count start pixel of a certain direction (N, NE, NW) does not become black. Therefore, a hole measurement signal cannot be on at this part T, i.e. the measurement such as the one shown in Figure 11 cannot be done on this part T, because the counting precedure cannot be started. In Figure 12, a sign "x" on the right of a direction sign shows that the count in the respective direction cannot be done. Further, a number in parentheses on the right side of a direction sign shows a count value of each direction (the same in Figure 13).

Although, by paying attention to an area except for the part T in a shape shown in Figure 4, the measurement such as Figure 11 looks possible, the number of consecutive black pixels is not in the predetermined range. A case that the measurement such as Figure 11 is really possible is extremely limited. Therefore, in a hole mask image of the conventional technique, the coverage of a photo via hole is bad, and an appropriate hole mask image of the photo via hole can not be made. As a result, in a case of an inspection of a wiring pattern, a lot of false signals occur, so that the inspecting apparatus is unsuitable.

By the way, in Figure 12, a value of a numerical sum of black pixels of all directions becomes, even in the part T in Figure 4, a positive finite value (3+1+1+1+2=8). Therefore, by setting a constant upper limit to the value of the sum, the measurement such as Figure 11 can recognize the part T. However, when the measurement is done with a parallel pattern consisting of a conductor spacing Z of width in unison with a diameter of a photo via hole as shown in Fig. 13, the value of the sum (4+4+4=12) can become equal to or less than the upper limit value. This means, a place that is not a photo via hole is erroneously interpreted as a place that is a photo via hole. If there is a hole recognition effective signal near the parallel pattern, an unnecessary hole mask is generated, so that the reliability of the inspection is reduced. Although it is conceivable that the affine transformation (a parallel translation, magnification adjustment, a rotation) is made on the pattern image for matching, the inspection tact time increases largely.

Document JP-A-6294626, which represents the closest prior art, discloses a wiring pattern inspecting apparatus for inspecting a printed wiring board, comprising a pattern image making means, a diameter judging means, a mask recognition area making means, a mask candidate authorization means, a mask making means, and an inspecting means. In this document, black pixels are counted from four different measurement start pixels, and the counting can be carried out only in case all of the four measurement start pixels are black pixels. Hence, the inspecting apparatus according to this document cannot deal with blind via holes or non-circular shapes.

Further wiring pattern inspecting apparatus useful for understanding the invention are disclosed in documents US-A-4 797 939, EP-A-0 498 462, JP 07 027534 A, and US-A-5 608 816.

### SUMMARY OF THE INVENTION

According to one aspect of the invention, a wiring pattern inspecting apparatus includes a pattern image making means, a diameter judging means, a mask recognition area making means, a mask candidate authorization means, a mask making means and an inspecting means. The pattern image making means is for making a pattern image formed from binarized pixel data obtained by capturing a wiring pattern of the printed wiring board to be inspected. The diameter judging means is for selecting, one at a time, each pixel included in the pattern image as a measurement start pixel, counting, with respect to said measurement start pixel, in a plurality of directions the number of black pixels which are consecutively arranged from the same measurement start pixel, comparing with respect to each direction the number of the consecutively arranged black pixels with a reference value which is set in each direction, and judging any one of the plurality of directions to be good when the number of the consecutively arranged black pixels is a natural number equal to or less than the reference value, and no-good when the number of the consecutively arranged black pixels is 0 or larger than the reference value, the reference value set in each direction of the plurality of directions being the same or different from each other. The mask recognition area making means is for producing a mask recognition effective signal that shows a range in which a non-inspection-target area exists with respect to the printed wiring board. The mask candidate authorization means is for determining whether the selected measurement start pixel is a mask candidate pixel based on a determination of the diameter judging means. The mask making means is for making a mask image by comparing the mask candidate pixel with the a mask recognition effective signal and determining whether each mask candidate pixel originates from the via hole. The inspecting means is for extracting a defect shape from a part of the pattern image except for a part corresponding to the mask image.

At first, the wiring pattern inspecting apparatus captures a wiring pattern of an object to be inspected, and makes a pattern image consisting of pixel data obtained by capturing the wiring pattern. When the pixel data are binarized, each pixel in the pattern image is either a black pixel or a white pixel. Generally, a pixel of a wiring pattern is a white pixel, and a pixel between wiring patterns is a black pixel. And every pixel in a via hole is ideally a black pixel. However, a black pixel group in the via hole can actually be distorted, because one part becomes a white pixel due to variations of luminosity values before the binarization. Operations until this step is done by a pattern image making means.

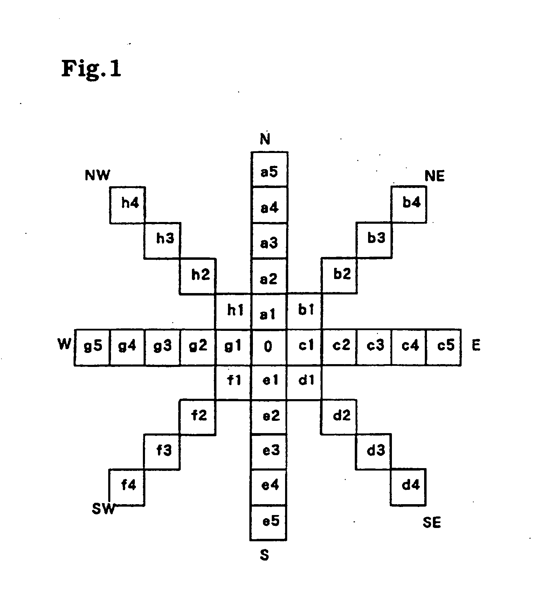

Next, with respect to each pixel in the pattern image, a diameter judgment is done by a diameter judging means. The diameter judgment is done as follows. The number of consecutively arranged black pixels is counted from a selected pixel as a starting point in each of a plurality of directions (4, 8, 12, 16 directions and so forth). That is, a measurement start pixel is the same pixel for each direction, as shown in Figure 1. At this point, the present invention differs from the conventional technique where the number of measurement start pixels is not always one as shown in Figure 11. Therefore, the count value becomes 0 or a natural number. And then, the selected pixel is judged as follows. When the count value is a natural number of less than or equal to a predetermined value (an upper limit value), the direction is judged to be good. On the contrary, when the count value is 0 or greater than the predetermined value, the direction is judged to be no-good. These processes are the diameter judgment, and done with respect to each pixel in the pattern image.

The upper limit value is a value corresponding to a size of a non-inspection-target area such as a via hole, but the value in each direction is not necessarily the same and may be different in the X direction, the Y direction and a diagonal direction in the pattern image. One reason is because the shape of the non-inspection-target area is not always circular. Incidentally, the counting in each direction is not necessarily to be continued till a point where the sequence of black pixels breaks off. The counting may be stopped at a point when the count value exceeds the upper limit value.

In this wiring pattern inspecting apparatus, a mask recognition area making means makes a mask recognition effective signal in parallel with a work of the diameter judgment. The mask recognition effective signal shows a range where a non-inspection-target area may exist in an object to be inspected. The making processes are as follows. A standard position where there is a non-inspection-target area such as a via hole in an object to be inspected has been input into the wiring pattern inspecting apparatus separately. The standard position may be input from a design data of the object to be inspected, or may be input from a measurement result of a measurement standard board that has only a via hole and the like. On a real object to be inspected, the mask recognition effective signal is usually generated by moderately expanding a region which includes a standard position because a position of a non-inspection-target area may slip a little off from the standard position by reason of a dispersion of an individual. To what extent the region is expanded is determined depending on the precision prescribed for the object to be inspected.

The result of the diameter judgment is sent to a mask candidate authorization means which authorizes the selected pixel as a mask candidate pixel or not. Preferably, this authorization is done as follows. The number of directions in that the judgment result is good is counted. Then, the number of directions is compared with a predetermined threshold, and then, if the number is more than or equal to the threshold, the selected pixel is authorized to be a mask candidate pixel. When the threshold equals the total number of the directions, the selected pixel authorized as a mask candidate pixel is a pixel in an area where a black pixel exists only in a diameter corresponding to the upper limit value. A black pixel in a via hole is an example. A pixel on a wiring pattern does not become a mask candidate pixel because the pixel is white. In addition, usually, pixels between wiring patterns do not become mask candidate pixels because the pixels are arranged consecutively for a long distance and do not fit in a diameter corresponding to the upper limit value, even if the pixels are black. At this point, a defect originating from a pinhole becomes a mask candidate pixel, but the defect is excluded from the mask candidate later.

The work described above is done with respect to every black pixel in the pattern image. By the work, among black pixels, a pixel existing in a non-inspection-target area such as a via hole and a pixel originating from a defect such as a pinhole are authorized as mask candidate pixels.

In the usual case, the number equal to the total number of directions (4, 8, 12, 16 directions and so forth) is provided as the predetermined threshold. The reason is as follows. Since a non-inspection-target area such as a via hole is usually surrounded by a land of a wiring pattern, the counting started from the starting pixel faces with a white pixel of a land and stops by all means, and the number of consecutive black pixels in any direction is always equal to or less than the upper limit value. Accordingly, the number of directions judged to be OK should be equal to the total number of directions. Incidentally, if black pixels in a certain direction are consecutively arranged for a long distance and the counted number exceeds the upper limit value, the black pixels supposedly do not originate from a via hole and so on, but from a part between wiring patterns.

This may, however, not always be the case. Depending on a precision prescribed for an object to be inspected, a breakout in a land surrounding a via hole may be permitted to a certain extent. In that case, the number of consecutive black pixels in a direction passing through the breakout may be greater than the upper limit value. To authorize this selected pixel to be a mask candidate pixel, the threshold must be less than the total number of directions. To be able to cope with both cases, it is preferable that the threshold is variable within a certain range and that the total number of directions is within the range.

However, there is usually only one breakout in a circumference of one via hole, and a remainder of the land should be connected. The breakout is induced by a low accuracy in adjusting a center of the via hole and a center of the land. Therefore, even when the threshold is set less than the total number of directions, it is preferable to authorize a selected pixel to a mask candidate pixel only in a case that the number of consecutively arranged directions, all of which have the count values less than or equal to the upper limit value, is equal to or more than the threshold value.

After the mask candidate pixel and the mask recognition effective signal are prepared, a mask making means compares them, and then makes a mask image. That is, the mask image is made of an extracted pixel that is both a mask candidate pixel and the mask recognition effective signal. By this, a pixel other than a pixel in an non-inspection-target area such as a via hole among mask candidate pixels is removed. A pixel of a defect like a pinhole and so on is removed here, so the pixel is not masked. When a mask candidate pixel corresponding to a mask recognition effective signal is extracted, a mask image can be made of only the pixel itself or can be made by expanding the area of pixels by some magnification. In this way, black pixels in a binarized pattern image are covered to the minimum by the mask image.

After the mask image is made, an inspecting means carries out an inspection. The inspecting means extracts a defect shape from a part except a part of the mask image among the pattern image. In a part of the mask image, even if a defect shape is inspected, it is ignored because it originates from a via hole. At this point, since the mask image made by the mask making means has a minimum size, reliability of an inspection in a vicinity of an non-inspection-target area such as a via hole is not lost, and besides, the occurrence of a false signal is prevented.

### BRIEF DESCRIPTION OF THE DRAWINGS

Figure 1 is an explanatory drawing of a counting method of pixels in various directions according to a wiring pattern inspecting apparatus of the present invention;
Figure 2 is a block diagram of a wiring pattern inspecting apparatus according to an embodiment of the present invention;
Figure 3 is an explanatory drawing of a binary image of a plated through hole;
Figure 4 is an explanatory drawing of a binary image of a photo via hole;
Figure 5 is an explanatory drawing of a binary image of a pinhole;
Figure 6 is an explanatory drawing of a binary image of an insulation part between wiring patterns;
Figure 7 is an explanatory drawing of a count of black pixels in each direction of the wiring pattern inspecting apparatus according to the embodiment of the present invention;
Figure 8 is an explanatory drawing of a diameter judging process with a use of SRAM;
Figure 9 is an explanatory drawing of a mask judging process with a use of SRAM;
Figure 10 is an explanatory drawing of a breakout in a land;
Figure 11 is an explanatory drawing of a counting method of pixels in various directions according to a conventional wiring pattern inspecting apparatus;
Figure 12 is an explanatory drawing of a measurement of a photo via hole according to the conventional wiring pattern inspecting apparatus; and
Figure 13 is an explanatory drawing of a measurement of a conductor spacing insulation part according to the conventional wiring pattern inspecting apparatus.

### DESCRIPTION OF THE PREFERRED EMBODIMENTS

The preferred embodiments will now be described with reference to the accompanying drawings, wherein like reference numerals designate corresponding or identical elements throughout the various drawings.

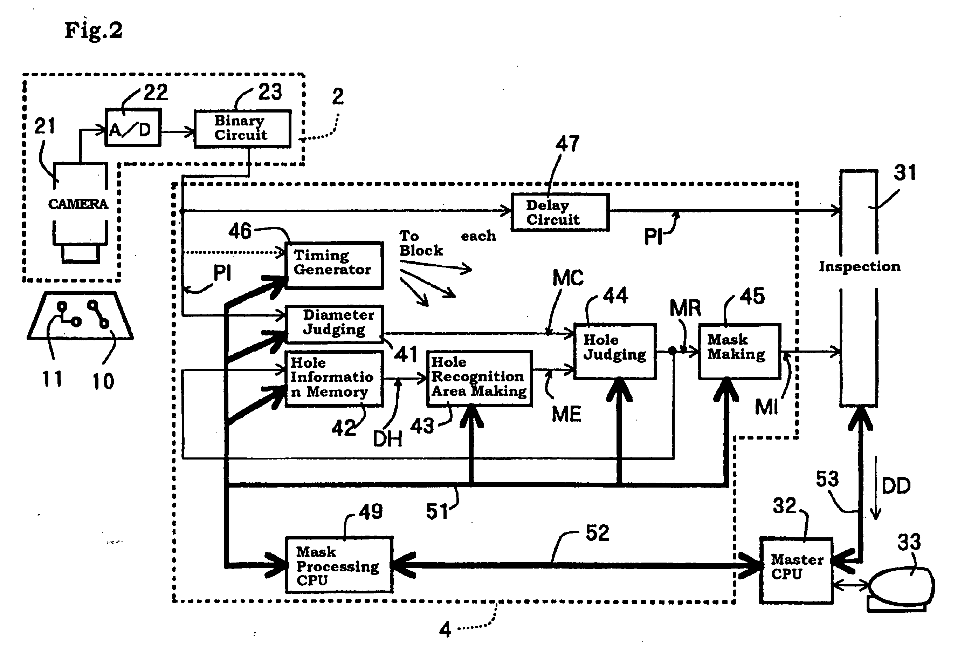

A wiring pattern inspecting apparatus according to this embodiment inspects a quality of a wiring pattern formed on a printed wiring board. This wiring pattern inspecting apparatus has, as shown in a block diagram of Figure 2, an imaging system 2 and an inspecting unit 31 and a mask processing unit 4 in between. And, furthermore, a master CPU 32 to do total general control and a terminal 33 for operation by an operator and indication of a test result are provided. A communication bus 53 connects the inspection unit 31 and the master CPU 32.

At first, the imaging system 2 is described. The imaging system 2 has a function of capturing a pattern image from a wiring pattern 11 formed with a metal such as copper on a printed wiring board 10. Therefore the imaging system 2 comprises a CCD camera 21 to capture the wiring pattern 11, an A/D conversion unit 22 to convert an analog image to a digital signal and a binary circuit 23 to binarize the digital signal. That is, a pattern image PI which is output from the binary circuit 23 is a binary image made up of black pixels and white pixels. In the pattern image PI, a pixel of a place corresponding to the wiring pattern 11 is a white pixel generally, and a pixel of a place outside thereof is a black pixel. The place outside of the wiring patterns may be an area between the wiring patterns, an area in a via hole or a defect such as a pinhole.

Next, the mask processing unit 4 is described. The mask processing unit 4 has a function of making a mask image that shows a non-inspection-target area where the inspection is not done in the pattern image, and supplying the mask image to the inspecting unit 31 together with the pattern image. For this function, the mask processing unit 4 has the following blocks: a diameter judging unit 41 that receives a pattern image PI from the binary circuit 23 of the imaging system 2, and then carries out a diameter judgment of the black pixels with respect to each selected pixel in the pattern image PI; a hole information memory unit 42 that stores data of a via hole of a printed wiring board 10; a hole recognition area making unit 43 that generates a hole recognition effective signal ME based on data DH of the via hole; a hole judging unit 44 that compares the hole recognition effective signal ME with a judgment result MC of the diameter judging unit 41; a mask making unit 45 that makes a mask image MI based on the judgment result of the hole judging unit 44; a timing generator unit 46 that supplies a drive clock to each block; a mask processing CPU unit 49 that controls the mask processing unit 4 generally; and a delay circuit 47 that delays the pattern image PI during the time of making the mask image MI, and then supplies the pattern image PI to the inspecting unit 31. All of these blocks are connected mutually by a local bus 51. And the mask processing CPU unit 49 is connected to the master CPU 32 by a communication bus 52.

The main structures of each block of the mask processing unit 4 are shortly described. The diameter judging unit 41 is a block carrying out a diameter judgment with respect to a black pixel as described above. The diameter judgment is a process to remove a pixel originating from an area between the wiring patterns from the totality of black pixels in the pattern image PI. The black pixel corresponding to the area between the wiring patterns is removed because it is not a cause of a false signal and does not have to be masked. In addition, the area can be definitely distinguished from a via hole and the like since it extends for a long distance along a wiring pattern 11. The judgment result MC of the diameter judgment is sent to hole-judging unit 44.

The hole information memory unit 42 is a block to store data DH of a via hole of the printed wiring board 10 as described before. A via hole often causes a false signal at a quality inspection of a printed wiring board 10, while a position of the via hole is predefined in each type of the printed wiring board 10. The data DH may be obtained from, for example, design data of the printed wiring board 10. The data may also be obtained from a pattern image PI of a measurement standard board. Although either method is preferable, in this embodiment, the method of using the design data is adopted. Incidentally, in the case of using the measurement standard board, a board having only via holes formed with the same specifications as the printed wiring board 10 may be used as the measurement standard board. Alternatively, the first produced printed wiring board among a number of printed wiring boards 10 of the same type produced in the same production lot may be used as the measurement standard board. The data DH are sent to the hole recognition area making unit 43.

The hole recognition area making unit 43 is a block to generate a hole recognition effective signal ME as described above. In this block, although the data DH supplied by the hole information memory unit 42 as it is may be used as the hole recognition effective signal ME, in this embodiment, the data DH expanded by a predetermined width (pixels or magnification) are used as the hole recognition effective signal ME because, in the printed wiring board 10, a real location of a via hole does not always correspond accurately to the data DH, because of dispersions of the machining accuracy. The expanding width may be variable depending on a grade of machining accuracy predefined in each type of the printed wiring board 10. Therefore, the hole recognition effective signal ME covers all pixels in a region in which a via hole may exist in the printed wiring board 10. If there is a black pixel as a mask candidate pixel in the region, it is conceivable that the black pixel shows a real via hole. On the contrary, if there is a black pixel as a mask candidate pixel in the region outside, a mask should not be generated based on the black pixel because the black pixel is not related to a via hole of the printed wiring board 10. The hole recognition effective signal ME is sent to the hole judging unit 44.

The hole judging unit 44 is a block to compare the hole recognition effective signal ME with a judgment result MC of the diameter judging unit 41 as described above. The object of the hole judging unit 44 is to pick only those pixels from the black pixels in the pattern image PI truly originating from a via hole of the printed wiring board 10. For this, this block picks a black pixel authorized to be a mask candidate pixel based on the judgment result MC, and then compares the black pixel with the hole recognition effective signal ME. That is, the black pixel in a region of the hole recognition effective signal ME is judged as a pixel truly originating from a via hole. On the other hand, a black pixel in the region not included in the hole recognition effective signal ME is judged as a pixel truly not originating from a via hole. A hole recognition signal MR of a pixel judged to be a black pixel truly originating from a via hole is sent to the mask making unit 45.

The mask making unit 45 is a block to make a mask image MI based on the judgment result of the hole judging unit 44 as described above. In this block basically, one pixel, corresponding to each pixel contained in the hole recognition signal MR sent by the hole judging unit 44, is allocated to a mask image. Therefore, a mask that just covers a via hole is provided. Afterwards, depending on the required inspection precision, the mask may be expanded in magnification of a certain degree (such as 9 times) with respect to each pixel contained in the hole recognition signal MR. In that case, a little larger (if the magnification is 9 times, one pixel wider) mask is provided. The mask image MI made is sent to the inspecting unit 31.

Next, the inspecting unit 31 is described. The inspecting unit 31 detects a shape that is finally considered as a defect of a pattern from a pattern image PI, and then outputs a detection signal DD toward the master CPU 32. For this, the mask making unit 45 inputs the mask image MI into the inspecting unit 31, and the pattern image PI is input via a delay circuit 47 in order to match a timing with the input of the mask image MI. And, in the inspecting unit 31, a defect shape of an open circuit, a short circuit, a conductor loss and so forth is extracted from the area other than the non-inspection-target area defined by the mask image MI in the pattern image PI. For this, data of the defect shape may be pre-stored in the inspecting unit 31, or may be supplied by the master CPU 32.

Next, actions of a quality inspection of the printed wiring board 10 by this wiring pattern inspecting apparatus are described. In this embodiment, with respect to the printed wiring board 10 as an object to be inspected, data DH of a via hole, which are obtained from design data of the same type of a printed wiring board 10 are pre-stored in a hole information memory unit 42.

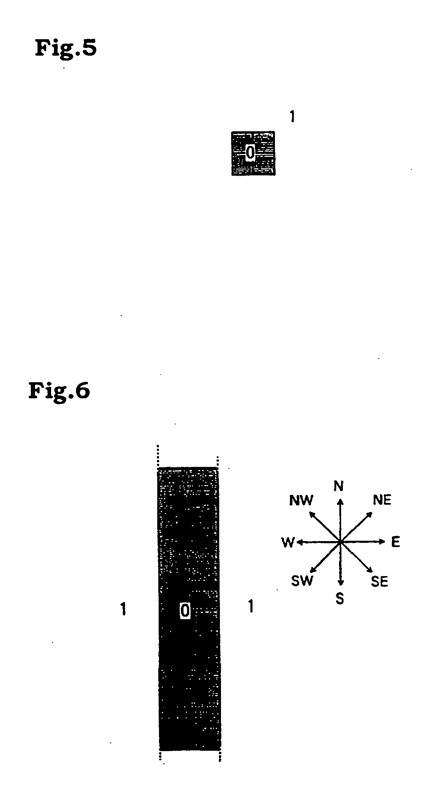

At first, the printed wiring board 10 to be inspected is put under a CCD camera 21, and the wiring pattern 11 on the printed wiring board 10 is captured. An analog image of the wiring pattern 11 is converted into a digital signal with the A/D conversion unit 22, and then binarized with the binary circuit 23. Therefore, the pattern image PI as a binary image consisting of black pixels and white pixels is provided. The pattern image PI is sent to the mask processing unit 4, and input into the diameter judging unit 41. The pattern image PI contains a shape formed of black pixels, such as a plated through hole (Figure 3), a photo via hole (Figure 4), a pinhole (Figure 5) and a conductor spacing (Figure 6). Of course, the photo via hole shown in Figure 4 has a distorted shape by the reason explained in the background-art clause.

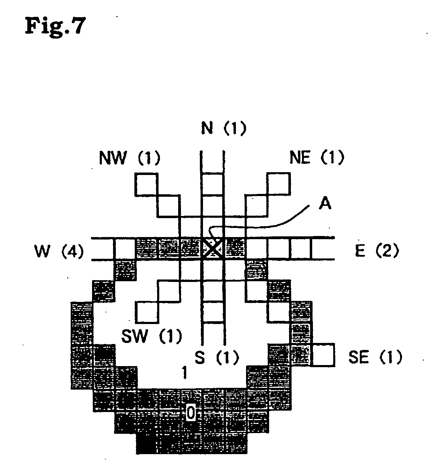

In the diameter judging unit 41, the following works are done with respect to a black pixel in the pattern image PI. As shown in Figure 7, a certain black pixel A is selected, and the number of consecutive black pixels starting from the selected black pixel A is counted in each of eight directions N, NE, E, SE, S, SW, W and NW. The selected pixel A is counted as 1. As shown with a number in parenthesis on the right side of each direction sign in Figure 7, the count value is "2" in the direction E, and the count value is "4" in the direction W. The count value of the direction other than these is "1".

After a count value in each direction is obtained, the count value is compared with the number of pixels corresponding to a design value of a diameter of a plated through hole or a photo via hole contained in the printed wiring board 10 (in this embodiment, the diameter of the photo via hole is "11" pixels), and then judged whether OK or NG. For this comparison, a look-up table such as List I is prepared in the diameter judging unit 41. In a real look-up table, a "count value" shown in List I is expressed as binary number.

**[List I]**

| | | | | | | | | | |
|---|---|---|---|---|---|---|---|---|---|
| Count Value | 0 | 1 | 2 | ... | 10 | 11 | 12 | 13 | ... |
| Output Value | 0 | 1 | | | | | 0 | | |

That is, an output value "0" is assigned for a count value "0", "12" and more than "12", and an output value "1" is assigned for a count value of "1" to "11". The output value "0" means that a count result of the respective direction is NG, and the output value "1" means that a count result is OK. The greatest count value that is assigned the output value "1" is the number of pixels corresponding to a design value of a diameter of a via hole. Therefore, in a case that a count value is a positive number less than or equal to "11" that is a diameter of the via hole, the respective direction of the selected pixel is judged to be OK, and in other cases, the direction of the selected pixel is judged to be NG. A plurality of such look-up tables is prepared depending on the size of each via hole.

The direction having a count value "0" is judged to be NG. This means a selected pixel cannot be authorized to be a mask candidate if it is white. Further, the direction having a count value equal to or more than "12" is judged to be NG. This means, a selected pixel is not a pixel in a via hole because there are black pixels over a long distance. Concerning the selected pixel A as shown in Figure 7, every direction is judged to be OK. Similarly, concerning the selected pixel in a plated through hole (Figure 3) or a pinhole (Figure 5), every direction is judged to be OK. On the other hand, concerning a selected pixel in a conductor spacing (Figure 6), the direction N and the direction S are judged to be NG.

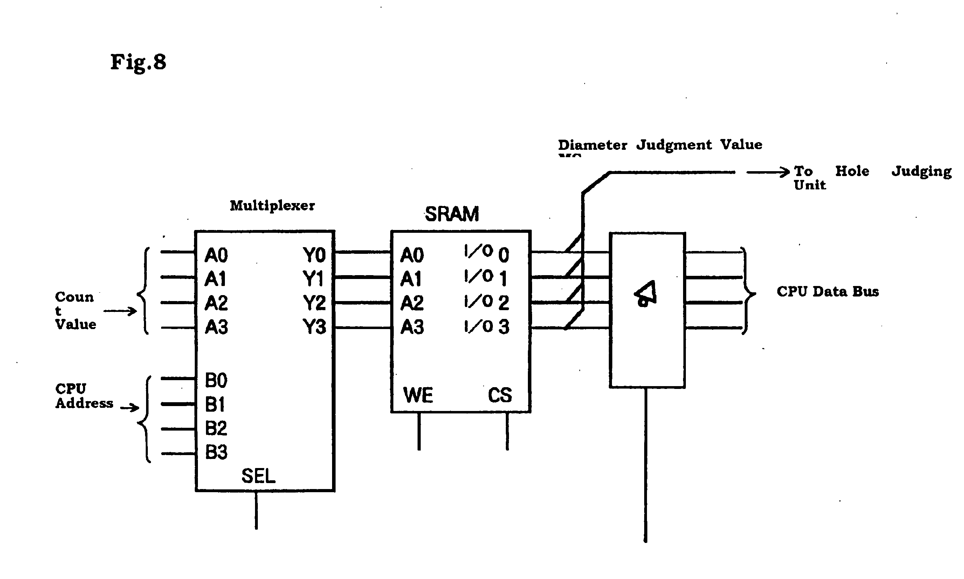

In the diameter judging unit 41, as shown in Figure 8, a diameter judgment described above is carried out with a SRAM. That is, in a system shown in Figure 8, a count value is input into an address line of the SRAM (AO to A3) via a multiplexer, and then, depending on the count value, an output value (0 (NG) or 1 (OK)) shown in the look-up table of List I is output into a data line of the SRAM (I/O 0 to I/O 3). The total number of directions shown in Figure 7 is eight. Thus the same number of circuits shown in Figure 8 is provided, and the processing is performed in parallel in the circuits. In Figure 8, 4 bits of data lines are provided in the SRAM, so four ways of judgment standards of OK or NG can be set. In this embodiment, only one way is set. Alternatively, the 4 bits may be used as a look-up table in simultaneously judging four different hole diameters. An output value of each direction (hereafter referred to as "diameter judgment value MC") is sent to the hole judging unit 44. These processes are carried out with respect to each pixel in a pattern image PI. Incidentally, to write the look-up table of List I into the SRAM shown in Figure 8, a CPU data bus is connected to a CPU address, and then the data are input. The above is a processing in the diameter judging unit 41.

In parallel with a processing in the above-mentioned diameter judging unit 41, a hole recognition effective signal ME is generated in the hole information memory unit 42 and the hole recognition area making unit 43. For this, data DH with regard to a position and size of a via hole in the printed wiring board 10 to be inspected is extracted from design data beforehand, and then is provided in the hole information memory unit 42. A value of the data DH is "1" concerning a pixel in a via hole, and a value is "0" concerning a pixel aside. 8 bits data width in the hole information memory unit 42 can cope with a maximum of eight types of via holes. And, in the hole recognition area making unit 43, the hole recognition effective signal ME may be generated by expanding the data DH with a predetermined pixel width. The reason is because a position of a via hole can deviate in a predetermined clearance from a design value in a real printed wiring board 10. That is, the hole recognition effective signal ME is made with considering the greatest range that the via hole could deviate from the design value. The hole recognition effective signal ME is sent to a hole judging unit 44.

Next, a processing in the hole judging unit 44 is described. Into the hole-judging unit 44, the diameter judgment value MC of each direction of each black pixel in a pattern image PI is input into from the diameter judging unit 41, and a hole recognition effective signal ME is input from the hole recognition area making unit 43. Furthermore, a signal of an OK-continuing number is input from a mask processing CPU unit 49. The details on the OK-continuing number are explained later, but a value of it is fundamentally the same as the number of directions judged in the diameter judging unit 41, so in this embodiment, the value is "8". By these, a hole judgment is carried out with respect to each black pixel in the pattern image PI by the hole judging unit 44.

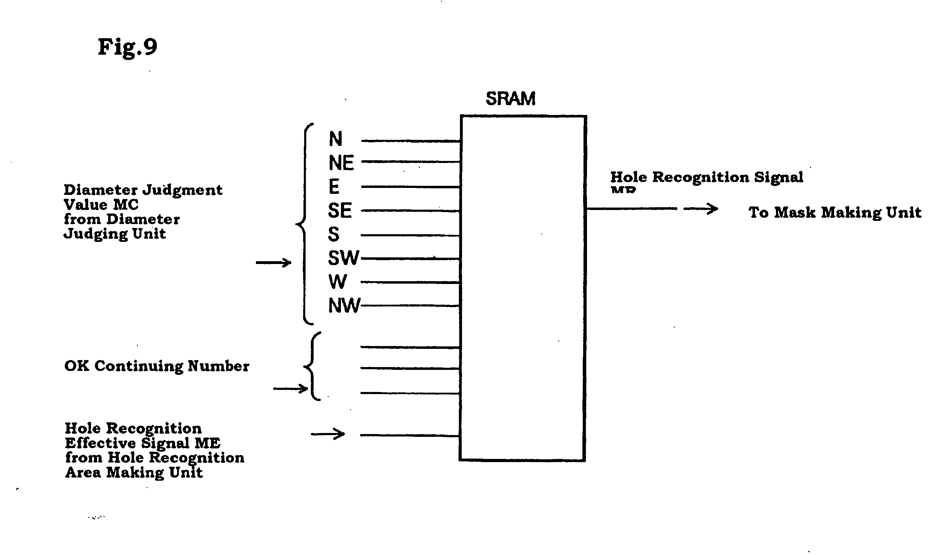

This hole judgment is done with a SRAM as shown in Figure 9. In a system shown in Figure 9, a diameter judgment value MC of each direction from a black pixel in the pattern image PI is input into an address line of the SRAM. In addition, a signal of an OK-continuing number and a hole recognition effective signal ME are input. By these, a hole recognition signal MR is made as follows, and then output from a data line. At first, the number of consecutive directions in which the diameter judgment value MC is "1", i.e. OK, is counted. For example, from a selected pixel A shown in Figure 7, the counted number is "8" because the diameter judgment is OK in all directions. Similarly, from a selected pixel in a plated through hole (Figure 3) and a pinhole (Figure 5), the counted number is "8". On the other hand, on a selected pixel in a conductor spacing (Figure 6), the counted number is "3" because the direction in which the diameter judgment is OK in succession is "NE, E, SE" and "SW, W, NW" and a judgment in direction N and direction S is NG.

And this counted number is compared with an OK-continuing number. In the case of the counted number being equal to or more than the OK-continuing number, a selected pixel is authorized to be a mask candidate. And in the case of the counted number being less than the OK-continuing number, the selected pixel is not authorized to be a mask candidate. For example, with respect to a selected pixel A shown in Figure 7, the counted number is "8", so the selected pixel is authorized to be a mask candidate. Similarly, with respect to a selected pixel in a plated through hole (Figure 3) or a pinhole (Figure 5), the selected pixel is authorized to be a mask candidate. On the other hand, with respect to a selected pixel in a conductor spacing (Figure 6), the counted number is "3" and less than the OK-continuing number. Thus, the selected pixel is not authorized to be a mask candidate.

Incidentally, an OK-continuing number is set as a total number of directions because a breakout in a land of a via hole circumference is not allowed in a normal printed wiring board 10. But there is a case that a breakout in a land is permitted to some extent by specifications of a printed wiring board 10 that may be formed with low grade forming accuracy. In that case, as shown in Figure 10, a land is broken in one place, and then a diameter judgment result in a direction that goes through that part becomes NG. It is unsuitable for a quality inspection that this selected pixel is not authorized to be a mask candidate in this case. This can be avoided if the OK-continuing number is a little smaller than the total number of directions, or if a specific direction is judged "OK". Because of this, the OK-continuing number is a variable and can be set within a range including a total number of directions. Further, the judgement is set in such a way that a predetermined direction of a predetermined hole may have a fixed judgement result.

After a selected pixel is authorized to be a mask candidate, the selected pixel is sorted by a hole recognition effective signal ME. That is, only in the case that a selected pixel is recognized as a mask candidate, and besides, a position of the selected pixel is within a range of the hole recognition effective signal ME, the selected pixel is judged to be a true hole recognition signal. By this sorting, a mask candidate pixel not included in the hole recognition effective signal ME is removed. The mask candidate pixel not included in the hole recognition effective signal ME is considered as a pixel not originating from a via hole but originating from a defect such as a pinhole. Therefore, masking such a pixel is unsuitable.

Authorization of a mask candidate and sorting by a hole recognition effective signal ME described above are carried out with respect to each black pixel in a pattern image PI. Therefore, a hole recognition signal MR that is sent from a hole judging unit 44 to a mask making unit 45 is an information about a pixel finally selected as a true standard of making a mask.

Then, the mask making unit 45 that receives an input of the hole recognition signal MR makes a mask image MI. That is, each pixel contained in the hole recognition signal MR is allocated a mask pixel. Therefore, a mask image MI that just covers a via hole is provided (in Figure 4, every pixel of "0", as it is, is made to be a mask). Still, each pixel contained in a hole recognition signal MR may be multiplied by a magnification of a certain degree (such as 9 times). Then, a little larger (if the magnification is 9 times, one pixel wider) mask is provided (in a case of Figure 4, a mask image expanded by one pixel for each pixel in a mask image that just covers the via hole is prepared). So, it may be said that the mask making unit 45 is an expanding filter to get an arbitrary mask size. A mask image MI expresses a part considered to be targets outside of a quality inspection in a pattern image PI.

After a mask image MI is made, an inspection processing is done with the inspecting unit 31. For this, a mask image MI and a pattern image PI are input into this inspecting unit 31. At this time, the pattern image PI input into the inspecting unit 31 has been given a delay processing by a delay circuit 47 to be delayed for a time period of a mask processing so as to be aligned with the mask image MI. In addition, in the inspection unit 31, data of defect shapes such as an open circuit, a short circuit and a conductor loss are supplied beforehand by the master CPU 32. Therefore, in the inspecting unit 31, a defect shape or a shape that resembles a defect shape can be extracted from a region outside of the mask image MI in the pattern image PI. Data DD of, for example, a defect shape being extracted are sent to the master CPU 32, and then aggregated. Here, on some specification of a printed wiring board 10, there is a case that a shape that resembles the defect shape is contained in a good wiring pattern. In such a case, it is preferable to prepare a data in the inspecting unit to exclude the shape from an object to be inspected beforehand. Defect data aggregated by the master CPU 32 may be displayed through a terminal 33, or may be output.

As described above, a printed wiring board 10 is inspected. Then, even if another printed wiring board 10 of the same type and belonging to the same production lot is inspected subsequently in the same way as the first one, a hole recognition signal MR is extracted from a pattern image PI of the printed wiring board 10, and then a mask image MI is made again because a quality inspection must be done with a highly precise mask image MI matching the hole arrangement of the printed wiring board 10.

As discussed in detail above, in a wiring pattern inspection apparatus of this preferred embodiment, with respect to each black pixel in a pattern image PI formed of binary data gained by capturing a printed wiring board 10, with the diameter judging unit 41, the number of consecutive black pixels from a selected pixel is counted in each of eight directions, and a diameter judgment value MC is output for each of these directions. Here, even a direction of one black pixel is not overlooked, because in case of a black pixel a count value of the selected pixel is counted as "1" in every direction. Because of this, even if the pattern image PI includes a black pixel group of a distorted shape such as a via hole, a hole recognition signal MR is made without a loss of a single pixel. Of course, a plated through hole extraction by a radius standard judgment of the conventional technique may be carried out. So, an appropriate mask that just covers a hole shape can be made in the mask making unit 45 even if the printed wiring board 10 includes a photo via hole. Therefore, a wiring pattern inspecting apparatus that rarely fails to carry out an inspection while eliminating an occurrence of a false signal caused by a via hole is realized.

In addition, in this embodiment, in the hole judging unit 44, a value of an OK-continuing number is used as a judgment standard to extract a hole recognition signal MR based on a diameter judgment value MC and a hole recognition effective signal ME. And the value of the OK-continuing number is a variable in such a way that it can be set in the range including the total number of directions. Therefore, even if the specifications of the printed wiring board 10 is such that the printed wiring board 10 has a low grade of machining accuracy and is permitted to include a breakout in a land to a certain extent, an inspection that rarely fails to carry out an inspection while eliminating an occurrence of a false signal is realized because the inspection can be done with a reasonable mask image in proportion to the specification.

By the way, an embodiment of the present invention is not limited to the preferred embodiment described above, and it is apparent that numerous improvements and modifications can be made thereto without departing from the concept of the invention. For example, the present invention can be made as follows. By a diameter judgment of a pattern image PI based on a hole recognition effective signal ME, a mask image may be made at higher speed. And, the data used are not limited to binary data, and even data that is equal to or more than ternary can be used. And, the number of directions of the diameter judgment in the diameter judging unit 41 is not limited to "8". For example, "4", "12", "16" and so on are possible, and it does not need to be a multiple of 4.

In addition, instead of using a design data of a printed wiring board 10, a data DH about a via hole, which is supplied from the hole information memory unit 42 to the hole recognition area making unit 43 may be prepared by another means. For example, a pattern image PI is made of a standard board having the same holes formed therin as the printed wiring board 10 to be inspected, and in the processing by the hole judging unit 44 of the pattern image PI (Figure 9), a hole recognition signal MR is made without using a hole recognition effective signal ME, but with only using a diameter judgment value MC and an OK-continuing number. Then, the hole recognition signal MR is fed back to a hole information memory unit 42 and used as the data DH. In that case, furthermore, by feeding back the hole recognition signal MR to the hole information memory unit 42, whenever a printed wiring board 10 is inspected, a learning effect is given to that apparatus.

Obviously, numerous modifications and variations of the present invention are possible in light of the above teachings. It is therefore to be understood that within the scope of the appended claims, the invention may be practiced otherwise than as specifically described herein.

## Claims

1. A wiring pattern inspecting apparatus for inspecting a printed wiring board (10) with a conductive circuit (11) and a via hole, comprising:
- pattern image making means (2) for making a pattern image (PI) formed from binarized pixel data obtained by capturing a wiring pattern (11) of the printed wiring board (10);
- diameter judging means (41) for selecting, one at a time, each pixel included in the pattern image (PI) as a measurement start pixel, counting, with respect to said measurement start pixel, in a plurality of directions the number of black pixels which are consecutively arranged from the same measurement start pixel, comparing with respect to each direction the number of the consecutively arranged black pixels with a reference value which is set in each direction, and judging any one of the plurality of directions to be good when the number of the consecutively arranged black pixels is a natural number equal to or less than the reference value, and no-good, when the number of the consecutively arranged black pixels is 0 or larger than the reference value, the reference value set in each direction of the plurality of directions being the same or different from each other;
- mask recognition area making means (43) for producing a mask recognition effective signal that shows a range in which a non-inspection-target area exists with respect to said printed wiring board (10);
- mask candidate authorization means (44) for determining whether said measurement start pixel is a mask candidate pixel based on a determination of said diameter judging means (41);
- mask making means (44, 45) for making a mask image (MI) by comparing said mask candidate pixel with said mask recognition effective signal and determining whether each mask candidate pixel originates from the via hole; and
- inspecting means (31) for extracting a defect shape from a part of the pattern image (PI) except for a part corresponding to said mask image (MI).

2. The wiring pattern inspecting apparatus according to claim 1, wherein
- based on a determination of said diameter judging means (41), said mask candidate authorization means (44), counts the number of directions which are judged to be good, and
- recognizes the measurement start pixel to be a mask candidate pixel when said number of directions is equal to or larger than a predetermined threshold value.

3. The wiring pattern inspecting apparatus according to Claim 1, wherein said mask candidate authorization means (44) recognizes said measurement start pixel as a mask candidate pixel when the number of consecutive directions which are judged to be good is equal to or larger than a predetermined threshold value.

4. The wiring pattern inspecting apparatus according to Claim 3, wherein said threshold value is variable.

5. The wiring pattern inspecting apparatus according to Claim 4, wherein a variable range of said threshold value includes a total number of directions.

6. The wiring pattern inspecting apparatus according to claim 1, wherein count of pixels is conducted in 4, 8, 12 or 16 directions.

## Patentansprüche

1. Verdrahtungsmusteruntersuchungsvorrichtung zur Untersuchung einer Leiterplatine (10) mit einer Leiterstruktur (11) und einem Via-Hole, umfassend:
- ein Musterbilderzeugungsmittel (2) zum Erzeugen eines Musterbildes (PI), das aus binarisierten Pixeldaten gebildet ist, die durch Aufnehmen eines Verdrahtungsmusters (11) der Leiterplatine (10) gewonnen sind;
- ein Durchmesserbeurteilungsmittel (41) zum Auswählen, eines nach dem anderen, jedes Pixels, das in dem Musterbild (PI) enthalten ist, als ein Messungsstartpixel, Zählen, bezüglich des Messungsstartpixels, in einer Mehrzahl von Richtungen die Anzahl schwarzer Pixel, die von demselben Messungsstartpixel aus aufeinanderfolgend angeordnet sind, Vergleichen bezüglich jeder Richtung die Anzahl der aufeinanderfolgend angeordneten schwarzen Pixel mit einem Referenzwert, der in jeder Richtung eingestellt ist, und Beurteilen jede der Mehrzahl von Richtungen als gut, wenn die Anzahl der aufeinanderfolgend angeordneten schwarzen Pixel eine natürliche Zahl gleich groß wie oder kleiner als der Referenzwert ist, und als nicht gut, wenn die Anzahl aufeinanderfolgend angeordneter schwarzer Pixel 0 oder größer als der Referenzwert ist, wobei die in jeder Richtung der Mehrzahl von Richtungen eingestellten Referenzwerte gleich oder voneinander verschieden sind;
- ein Maskenerkennungsbereicherzeugungsmittel (43) zum Erzeugen eines effektiven Maskenerkennungssignals, das einen Bereich zeigt, in dem ein Nichtuntersuchungszielbereich der Leiterplatine vorhanden ist;
- ein Maskenkandidatauthorisierungsmittel (44) zum Bestimmen, ob das Messungsstartpixel ein Maskenkandidatpixel ist, auf der Grundlage einer Bestimmung des Durchmesserbeurteilungsmittels (41);
- ein Maskenherstellungsmittel (44, 45) zum Herstellen eines Maskenbildes (MI) durch Vergleichen des Maskenkandidatpixels mit dem effektiven Maskenerkennungssignal und Bestimmen, ob ein jeweiliges Maskenkandidatpixel von dem Via-Hole stammt; und
- ein Untersuchungsmittel (31) zum Gewinnen einer Defektform von einem Teil des Musterbildes (PI) mit Ausnahme eines Teils, der dem Maskenbild (MI) entspricht.

2. Verdrahtungsmusteruntersuchungsvorrichtung nach Anspruch 1, wobei:
- auf der Grundlage einer Bestimmung des Durchmesserbeurteilungsmittels (41) das Maskenkandidatauthorisierungsmittel (44) die Anzahl von Richtungen zählt, die als gut beurteilt sind, und
- das Messungsstartpixel als ein Maskenkandidatpixel erkennt, wenn die Anzahl von Richtungen gleich groß wie oder größer als ein vorbestimmter Schwellenwert ist.

3. Verdrahtungsmusteruntersuchungsvorrichtung nach Anspruch 1, wobei das Maskenkandidatauthorisierungsmittel (44) das Messungsstartpixel als ein Maskenkandidatpixel erkennt, wenn die Anzahl aufeinanderfolgender Richtungen, die als gut beurteilt werden, gleich groß wie oder größer als ein vorbestimmter Schwellenwert ist.

4. Verdrahtungsmusteruntersuchungsvorrichtung nach Anspruch 3, wobei der Schwellenwert veränderlich ist.

5. Verdrahtungsmusteruntersuchungsvorrichtung nach Anspruch 4, wobei ein veränderlicher Bereich des Schwellenwerts eine Gesamtanzahl von Richtungen enthält.

6. Verdrahtungsmusteruntersuchungsvorrichtung nach Anspruch 1, wobei eine Zählung von Pixeln in 4, 8, 12 oder 16 Richtungen ausgeführt wird.

## Revendications

1. Appareil de contrôle du schéma de câblage destiné à contrôler une carte de circuit imprimé (10) avec un circuit conducteur (11) et un trou d'interconnexion, comprenant:
- un moyen de formation d'image de schéma (2) destiné à former une image de schéma (PI) formée à partir de données de pixels binarisées obtenues par l'acquisition d'un schéma de câblage (11) de la carte de circuit imprimé (10) ;
- un moyen d'évaluation de diamètre (41) destiné à sélectionner, un par un, chaque pixel inclus dans l'image de schéma (PI) en tant que pixel de début de mesure, à compter, par rapport au dit pixel de début de mesure, dans une pluralité de directions, le nombre de pixels noirs qui sont arrangés de manière consécutive à partir du même pixel de début de mesure, à comparer pour chaque direction, le nombre des pixels noirs arrangés de manière consécutive par rapport à une valeur de référence qui est fixée dans chaque direction, et à juger comme correcte l'une quelconque de la pluralité de directions lorsque le nombre des pixels noirs arrangés de manière consécutive est un entier naturel inférieur ou égal à la valeur de référence et comme non correcte lorsque le nombre des pixels noirs arrangés de manière consécutive est 0 ou supérieur à la valeur de référence, les valeurs de référence fixées dans chaque direction de la pluralité de directions étant identiques ou différentes les unes des autres ;
- un moyen de formation de zone de reconnaissance de masque (43) destiné à produire un signal efficace de reconnaissance de masque qui présente une plage dans laquelle une zone cible de non évaluation existe par rapport à ladite carte de circuit imprimé (10) ;
- un moyen d'autorisation de masque candidat (44) destiné à déterminer si ledit pixel de début de mesure est un pixel de masque candidat sur la base d'une détermination dudit moyen d'évaluation de diamètre (41) ;
- un moyen de formation de masque (44, 45) destiné à former une image de masque (MI) en comparant ledit pixel de masque candidat avec ledit signal efficace de reconnaissance de masque et en déterminant si chaque pixel de masque candidat provient du trou d'interconnexion ; et
- un moyen de contrôle (31) destiné à extraire une forme de défaut à partir d'une partie de l'image de schéma (PI) à l'exception d'une partie correspondant à ladite image de masque (MI).

2. Appareil de contrôle du schéma de câblage selon la revendication 1, dans lequel
- sur la base d'une détermination dudit moyen d'évaluation de diamètre (41), ledit moyen d'autorisation de masque candidat (44) compte le nombre de directions qui sont jugées comme correctes et
- reconnaît le pixel de début de mesure comme un pixel de masque candidat lorsque ledit nombre de directions est supérieur ou égal à une valeur seuil prédéterminée.

3. Appareil de contrôle du schéma de câblage selon la revendication 1, dans lequel ledit moyen d'autorisation de masque candidat (44) reconnaît ledit pixel de début de mesure comme un pixel de masque candidat lorsque le nombre de directions consécutives qui sont jugées comme correctes est supérieur ou égal à une valeur seuil prédéterminée.

4. Appareil de contrôle du schéma de câblage selon la revendication 3, dans lequel ladite valeur seuil est variable.

5. Appareil de contrôle du schéma de câblage selon la revendication 4, dans lequel une plage variable de ladite valeur seuil comprend un nombre total de directions.

6. Appareil de contrôle du schéma de câblage selon la revendication 1, dans lequel le comptage des pixels est exécuté dans 4, 8, 12 ou 16 directions.
